# EUROPEAN PATENT SPECIFICATION

(11) **EP 4 123 889 B1**
(45) Date of publication and mention of the grant of the patent: **10.12.2025**
(21) Application number: 20940039.9
(22) Date of filing: 10.09.2020
(51) Int. Cl.: H02K 9/193, H02K 5/18, F28D 9/00, F03D 80/60, F28D 15/00, F28F 27/00

(54) **COOLING SYSTEM**
KÜHLSYSTEM
SYSTÈME DE REFROIDISSEMENT

(30) Priority: 09.06.2020 CN 202010516498
(43) Date of publication of application: 25.01.2023
(73) Proprietor: Beijing Goldwind Science & Creation Windpower Equipment Co. Ltd., Beijing 100176 (CN)
(72) Inventor: WANG, Dinghui, Beijing 100176 (CN); LI, Jinmeng, Beijing 100176 (CN); YIN, Ran, Beijing 100176 (CN)
(74) Representative: Gulde & Partner
(86) International application number: PCT/CN2020/114536
(87) International publication number: WO 2021/248723

(56) References cited:
- EP-A1- 2 803 855
- WO-A1-2021/028340
- CN-A- 101 506 044
- CN-A- 102 099 651
- CN-A- 107 120 305
- CN-U- 208 027 834
- CN-U- 209 232 912
- JP-A- 2008 104 355
- US-A1- 2009 159 246
- US-A1- 2011 247 710

## Description

### FIELD

The present application relates to the technical field of cooling, and in particular to a cooling system.

### BACKGROUND

Wind energy is an open and safe renewable energy, and more and more attention is paid to the utilization of wind energy. As the most core equipment of wind power generation, the wind turbine is developing in the trend of being large-scale and more economical. With the increase of the capacity of a single unit, the loss of the entire wind turbine is also increasing. Especially with the rapid development of offshore units, the maintenance difficulty of the offshore units is much greater than that of onshore units due to the special environment where they are located. Therefore, the requirements for the reliability and easy maintenance of the offshore units are also continuously increasing.

A cooling system is one of the important components of the wind turbine, which is used to effectively perform heat dissipation and cooling to heat-generating components of the wind turbine, to ensure the efficient and stable operation of the wind turbine. Therefore, the improvement of the reliability of the cooling system is an important guarantee for the normal operation of the wind turbine.
In this context the US 2011/247710 A1 discloses a heat exchanger used in a hydraulic supply unit. The heat exchanger has a cooling circuit that carries a coolant, and the coolant absorbs the lost heat from the wind power plant at the electrical components of the wind power plant and dissipates it to the heat exchanger. Two heat exchangers are arranged in the cooling circuit. The hydraulic oil in the hydraulic component and the gearbox oil in the gearbox can be respectively guided in a circuit, so that the heat carried by the hydraulic oil or the gearbox oil is dissipated to the coolant. The heat transported by the coolant is output to the surrounding air through the heat exchanger.
EP 2 803 855 A1 discloses a cooling system includes two fluid pipe bridges which interconnect two cooling circuits. When opening at least partially the two control valves, the two cooling circuits can be coupled with each other. Thereby, an eventually existing remainder of the cooling capacity of one of the two cooling circuits can be used to support the other cooling circuit for cooling its heat generating device. The first cooling circuit includes a first heat exchanger configured for transferring heat from the first heat transfer fluid to a first surrounding of the first heat exchanger, and the first heat transfer fluid absorbs heat from the transformer and the converter. The second cooling circuit includes a second heat exchanger configured for transferring heat from the second heat transfer fluid to a second surrounding of the second heat exchanger, and the second heat transfer fluid absorbs heat from the nacelle and the generator.
The US 2009/0159246 A1 and the WO 2021/028340 A1 are considered to be the background to the invention.

However, the conventional cooling system can no longer meet the requirements of reliability, so a novel cooling system is required to be provided.

### SUMMARY

In view of this, an object according to the present application is to provide a novel cooling system, to solve the problem that the conventional cooling system cannot meet the requirements of reliability.

According to one aspect of the present application, a cooling system for a heat source of a component to be cooled is provided, which includes a heat exchange module, including at least a first passage and a second passage which are independent of each other, a first cooling circuit, connected to the first passage of the heat exchange module, and a second cooling circuit, connected to the first passage of the heat exchange module, where a first coolant in the first cooling circuit and/or a second coolant in the second cooling circuit is configured to flow through the first passage of the heat exchange module, to exchange heat with a third coolant which flows through the second passage of the heat exchange module. A cooling system according to the invention is defined in claims 1, 3 and 4.

According to the cooling system of the present application, with the arrangement of two cooling circuits, the reliability of the cooling system is improved. Therefore, the shutdown problem of the wind turbine can be reduced when the cooling system is applied to the wind turbine, and thus the availability of the wind turbine can be improved. In addition, according to the cooling system of the present application, with the arrangement of the heat exchange module having the heat exchange fins, the cooling efficiency of the cooling system can be further improved. In addition, according to the cooling system of the present application, the layout of the fault-tolerant structure of the two cooling circuits is simple and compact, which is easy to be implemented and maintained in a limited space. In addition, according to the cooling system of the present application, a reasonable component layout can be realized according to the cooling logic and technological requirements of the component to be cooled.

### BRIEF DESCRIPTION OF THE DRAWINGS

The above and other objects and features of the present application will become clearer through the following description of the embodiments in conjunction with the drawings. In the drawings:
FIG. 1 is a schematic block diagram of a cooling system according to a first embodiment of the present application,
FIG. 2 is a schematic block diagram of a cooling system according to a second embodiment of the present application,
FIG. 3 is a schematic block diagram of a cooling system according to a third embodiment of the present application, and
FIG. 4 is a schematic block diagram of a cooling system according to a fourth embodiment of the present application.

**Reference numerals in the drawings:**

| | | | |
|---|---|---|---|
| 1 | circulating pump, | 2 | liquid inlet pipeline, |
| 3 | first temperature sensor, | 4 | first on-off valve, |
| 5 | first pressure transmitter, | 6 | first filter, |
| 7 | second pressure transmitter, | 8 | first heat exchanger, |
| (All embodiments 8a to 8d) | | | |
| 8a | first liquid inlet, | 8b | first liquid outlet, |
| 8c | second liquid inlet, | 8d | second liquid outlet, |
| (Only first embodiment 8'a to 8'd) | | | |
| 8' | second heat exchanger, | 8'a | first liquid inlet, |
| 8'b | first liquid outlet, | 8'c | second liquid inlet, |
| 8'd | second liquid outlet, | | |
| (Only second embodiment 8'a to 8'd) | | | |
| 8' | second heat exchanger, | 8'a | first liquid inlet, |
| 8'b | first liquid outlet, | 8'c | second liquid outlet, |
| 8'd | second liquid inlet, | | |
| 9 | third pressure transmitter, | | |
| 10 | second temperature sensor, | 11 | regulating valve, |
| 12 | liquid outlet pipeline, | 13 | third on-off valve, |
| 14 | third temperature sensor, | 15 | third coolant return pipeline, |
| 16 | sixth pressure transmitter, | 17 | fourth pressure transmitter, |
| 18 | third coolant supply pipeline, | 19 | second filter, |
| 20 | second on-off valve, | 21 | fifth pressure transmitter, |
| 22 | connecting pipeline, | 23 | three-passage heat exchanger, |
| (Only third embodiment 23a to 23f) | | | |
| 23a | first liquid inlet, | 23b | first liquid outlet, |
| 23c | second liquid inlet, | 23d | second liquid outlet, |
| 23e | third liquid inlet, | 23f | third liquid outlet, |
| 24 | liquid inlet header pipe, | 25 | liquid outlet header pipe, |
| 26 | check valve, | 27 | first heat dissipater. |

### DETAILED DESCRIPTION OF THE EMBODIMENTS

Embodiments of the present application are described in detail with reference to the accompanying drawings. Examples of the embodiments are illustrated in the drawings, where same reference numerals represent same assemblies.

At present, a conventional small-capacity direct-drive wind turbine has relatively small load capacity and relatively few heat-generating components, especially for an onshore unit, due to the limitation of space layout and the consideration of cost, the unit generally operates with a single cooling system. When the cooling system fails, the wind turbine needs to be shut down to deal with the problem. With the increase of capacity of the single unit, the loss of heat-generating components of the wind turbine increases and the number of heat-generating components increases, so it is necessary to improve the reliability of the cooling system. However, for a single cooling system, once a failure occurs, the maintenance cost of the entire wind turbine and the loss of power generation will be increased.

Especially for an offshore unit, which is difficult to maintain, moreover, the number of components with heat dissipation demands has increased, the control process and logic of the components are different, and hence the requirements for the fault-tolerant structure and system layout are also different. In addition, with the continuous increase of the capacity of the unit, the loss of the unit itself increases. All the heat-generating components such as a generator, a shafting, a pitch controller, a nacelle cabinet, a nacelle, a converter cabinet, a transformer and so on need to be distributed with a predetermined cooling capacity to realize normal operation. Therefore, the composition of the cooling system is becoming more and more complex, and the number of cooling systems is increasing, and hence the cooling system needs to be implemented through different forms of fault-tolerant layout.

Therefore, based on the above demands, a novel cooling system is provided according to the present application, which can realize a reasonable layout of components according to the requirements of cooling logic and technology requirements of the components to be cooled. In addition, the cooling system employs a redundancy design with dual circuits as backup for each other, thus improving the reliability of the cooling system.

The cooling system is connected to the component to be cooled through two independent cooling circuits, and only heat is transferred between the two cooling circuits without mass transfer. Moreover, for different end structures of the component to be cooled, different connecting forms may be used by the cooling system, which can be adapt to and meet the requirements of different end structures. In a case that one of the two cooling circuits fails, the other cooling circuit can be started to work, so as to realize fault-tolerant operation of the two cooling circuits. Therefore, with this cooling system, fault tolerance of the cooling system can be realized under the condition that the requirements of heat dissipation of the component to be cooled are satisfied, thereby improving the reliability of the cooling system. When the cooling system is applied to the wind turbine, it can ensure that the wind turbine still operates normally without shutdown when one cooling system fails, thereby reducing the loss of power generation.

The cooling system includes a heat exchange module, a first cooling circuit and a second cooling circuit, and the coolants in the first cooling circuit and the second cooling circuit can exchange heat with a coolant of a heat source to be cooled (such as the heat-generating component in the wind turbine) in the heat exchange module. Herein, for convenience of description, the coolants in the first cooling circuit and the second cooling circuit are referred to as a first coolant and a second coolant respectively, and the coolant which directly absorbs heat from the heat source is referred to as a third coolant.

The heat exchange module includes at least a first passage and a second passage which are independent of each other, the first cooling circuit is connected to the first passage of the heat exchange module, and the second cooling circuit is connected to the first passage of the heat exchange module. The first coolant in the first cooling circuit and/or the second coolant in the second cooling circuit can flow through the first passage of the heat exchange module, so as to exchange heat with the third coolant which flows through the second passage of the heat exchange module.

In this way, the third coolant can be cooled by exchanging heat with the first coolant and/or the second coolant respectively. In addition, the first cooling circuit and the second cooling circuit can operate independently, once one of the cooling circuits fails, the other can be started at any time. Therefore, fault-tolerant operation of the cooling system is realized, thus ensuring the normal operation of the wind turbine without shutdown. Of course, the cooling system according to the present application is not limited to be applied to wind turbines, it can also be applied to various components to be cooled of other assembly systems.

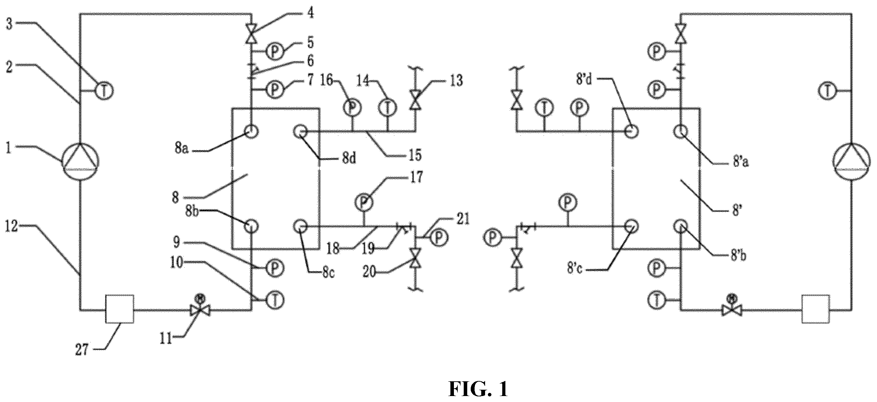

The specific configuration of the cooling system according to the present application is described hereinafter with reference to FIGS. 1 to 4.

FIG. 1 is a schematic block diagram of a cooling system according to a first embodiment of the present application.

As shown in FIG. 1, the cooling system includes a first cooling circuit located at a left side, a second cooling circuit located at a right side, and a heat exchange module which includes a first heat exchanger 8 and a second heat exchanger 8'. The configurations of the first cooling circuit and the second cooling circuit may be substantially the same, and the configurations of the first heat exchanger 8 and the second heat exchanger 8' may also be substantially the same.

Each of the first heat exchanger 8 and the second heat exchanger 8' at least includes a first passage and a second passage which are independent of each other, the first coolant in the first cooling circuit can flow through the first passage of the first heat exchanger 8, so as to exchange heat with the third coolant in the second passage of the first heat exchanger 8. The second coolant can flow through the first passage of the second heat exchanger 8', so as to exchange heat with the third coolant in the second passage of the second heat exchanger 8'. That is, the first coolant and the second coolant can exchange heat with the third coolant in the first heat exchanger 8 and the second heat exchanger 8' respectively. When one of the first cooling circuit and the second cooling circuit fails, the other cooling circuit can continue operating, thus realizing non-stop operation. The first cooling circuit and the second cooling circuit may adopt full-load fault tolerance (one for use and the other one for standby), or full-load operation may be realized by the two circuits operating together.

Since the configurations of the first cooling circuit and the first heat exchanger 8 and connection between the first cooling circuit and the first heat exchanger 8 are similar to the configurations of the second cooling circuit and the second heat exchanger 8' and connection between the second cooling circuit and the second heat exchanger 8', the first cooling circuit and the first heat exchanger 8 are described hereinafter as an example.

As shown in FIG. 1, the first cooling circuit may include a circulating pump 1, where an outlet of the circulating pump 1 is connected to a first end (specifically, a first liquid inlet 8a) of the first passage of the first heat exchanger 8 through a liquid inlet pipeline 2, and a second end (specifically, a first liquid outlet 8b) of the first passage of the first heat exchanger 8 is connected to the circulating pump 1 through a liquid outlet pipeline 12. In this way, the first coolant can circulate in the first cooling circuit under the action of the circulating pump 1. A first heat dissipater 27 may be further provided in the first cooling circuit, so as to cool the first coolant. The first heat dissipater 27 may be an air-cooled heat dissipater.

The first coolant exchanges heat with the third coolant in the first heat exchanger 8, and the third coolant circulates in the second passage of the first heat exchanger 8, a third coolant supply pipeline 18 and a third coolant return pipeline 15. A first end of the third coolant supply pipeline 18 is connected to a first end (specifically, a second liquid inlet 8c) of the second passage of the first heat exchanger 8, and a first end of the third coolant return pipeline 15 is connected to a second end (specifically, a second liquid outlet 8d) of the second passage of the first heat exchanger 8. The third coolant can flow into the second passage of the first heat exchanger 8 through the third coolant supply pipeline 18 after absorbing heat from a heat source device, and can flow back to the heat source device through the third coolant return pipeline 15 after exchanging heat with the first coolant, so as to continuously cool the heat source device.

Specifically, under the action of the circulating pump 1, the first coolant enters the first passage of the first heat exchanger 8 through the liquid inlet pipeline 2 while the third coolant enters the second passage of the first heat exchanger 8 through the third coolant supply pipeline 18, and thus heat exchange between the first coolant and the third coolant can be realized in the first heat exchanger 8. Preferably, the first coolant and the third coolant may flow reversely in the first heat exchanger 8. After the heat exchange is completed, the first coolant flows, under the action of the circulating pump 1, back to the first heat dissipater 27 through the liquid outlet pipeline 12 after flowing through the first passage of the first heat exchanger 8, and then re-enters the first passage of the first heat exchanger 8 after being cooled by the first heat dissipater 27, to perform next circulation. The third coolant flowing through the second passage of the first heat exchanger 8 can flow back to the heat source device through the third coolant return pipeline 15 under the action of a power source.

Optionally, the liquid inlet pipeline 2 may be provided with a first filter 6. For example, the first filter 6 may be arranged between the circulating pump 1 and the first liquid inlet 8a of the first heat exchanger 8, so as to improve the cleanliness of the first coolant flowing into the first heat exchanger 8, thereby avoiding pipe blockage. In addition, a first pressure transmitter 5 may be provided at an inlet side of the first filter 6, and a second pressure transmitter 7 may be provided at an outlet side of the first filter 6, to monitor an operation state of the first filter 6. For example, the first filter 6 is required to be replaced in a case that a pressure difference ΔP1 between the first pressure transmitter 5 and the second pressure transmitter 7 reaches a preset pressure difference ΔP1. In addition, a third pressure transmitter 9 may be provided at an outlet side of the first heat exchanger 8, to monitor the blockage situation of the first passage of the first heat exchanger 8. For example, the first passage of the first heat exchanger 8 is required to be unblocked in a case that a pressure difference ΔP2 between the second pressure transmitter 7 and the third pressure transmitter 9 reaches a preset pressure difference ΔP2.

In addition, a first temperature sensor 3 may be provided in the liquid inlet pipeline 2, and a second temperature sensor 10 may be provided in the liquid outlet pipeline 12 for sensing temperatures of the first coolant entering and leaving the first heat exchanger 8, so as to get a heat exchange state between the first coolant and the third coolant based on the sensed temperatures. In addition, a first on-off valve 4 may be further provided in the liquid inlet pipeline 2, and/or, a regulating valve 11 may be provided in the liquid outlet pipeline 12. By providing the first on-off valve 4 and/or the regulating valve 11, the local pipeline can be cut off by closing the first on-off valve 4 and/or the regulating valve 11 when the cooling system is maintained or the component is replaced, thus facilitating corresponding maintenance and replacement.

Similar to the configuration of the first cooling circuit, a second filter 19 may be provided in the third coolant supply pipeline 18, so as to improve the cleanliness of the third coolant flowing into the second passage of the first heat exchanger 8. A fourth pressure transmitter 17 and a fifth pressure transmitter 21 may be provided at two sides of the second filter 19, to monitor an operation state of the second filter 19. For example, the second filter 19 is required to be replaced in a case that a pressure difference ΔP3 between the fourth pressure transmitter 17 and the fifth pressure transmitter 21 reaches a preset pressure difference ΔP3. A third temperature sensor 14 may be provided in the third coolant return pipeline 15, to adjust an opening degree of the regulating valve 11 in the first cooling circuit according to the temperature value sensed by the third temperature sensor 14, so as to ensure that the temperature of the third coolant is not lower than the temperature set according to the technological requirements of the component to be cooled during the cooling process. In addition, a sixth pressure transmitter 16 may be provided in the third coolant return pipeline 15, to monitor the blockage situation of the second passage of the first heat exchanger 8 in combination with the pressure value sensed by the fourth pressure transmitter 17. In addition, a second on-off valve 20 may be provided in the third coolant supply pipeline 18 and/or a third on-off valve 13 may be provided in the third coolant return pipeline 15, so as to cut off the local pipeline by closing the second on-off valve 20 and/or the third on-off valve 13 when the cooling system is maintained or the component is replaced, thus facilitating corresponding maintenance and replacement.

Preferably, the first heat exchanger 8 may include a plate heat exchanger, and the plate heat exchanger may include heat exchange fins. Therefore, when the first coolant exchanges heat with the third coolant, the heat exchange fins of the first heat exchanger 8 can exchange heat with the external air at the same time, so as to further enhance the efficiency of cooling the third coolant.

Similarly, the second heat exchanger 8' may include a first liquid inlet 8'a, a first liquid outlet 8'b, a second liquid inlet 8'c and a second liquid outlet 8'd. The connections among the second heat exchanger 8', the second cooling circuit, the third coolant supply pipeline and the third coolant return pipeline are similar to the connections among the first heat exchanger 8, the first cooling circuit, the third coolant supply pipeline and the third coolant return pipeline, which are not described herein.

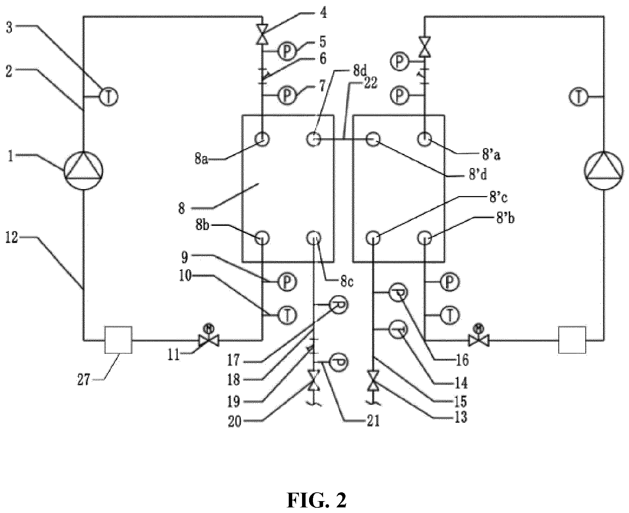

FIG. 2 is a schematic block diagram of the cooling system according to a second embodiment of the present application.

The cooling principle of the second embodiment is similar to that of the first embodiment, with the difference that a connecting pipeline 22 which connects the first heat exchanger 8 with the second heat exchanger 8' is provided in the second embodiment.

Different from the second heat exchanger 8' in the first embodiment, as shown in FIG. 2, the second liquid inlet 8'c of the second heat exchanger 8' in the first embodiment is used as a second liquid outlet in the second embodiment and is connected to the third coolant return pipeline 15, the second liquid outlet 8'd of the second heat exchanger 8' in the first embodiment is used as a second liquid inlet in the second embodiment and is connected to the second liquid outlet 8d of the first heat exchanger 8 through the connecting pipeline 22, thus reducing the layout and number of the third coolant supply pipeline 18 and the third coolant return pipeline 15. That is, by providing the connecting pipeline 22, the series connection between the second passage of the first heat exchanger 8 and the second passage of the second heat exchanger 8' is effectively realized, which reduces a path of the third coolant supply pipeline18 and a path of the third coolant return pipeline 15, and thus simplifies the layout of the pipelines.

In a case that the first heat exchanger 8 and the second heat exchanger 8' are connected in series through the connecting pipeline 22, a first end of the third coolant supply pipeline 18 is connected to a second end (that is, a second liquid inlet 8c) of the second passage of the first heat exchanger 8, and a first end of the third coolant return pipeline 15 is connected to a second end (that is, a second liquid outlet) of the second passage of the second heat exchanger 8'. Of course, the positions of the third coolant supply pipeline 18 and the third coolant return pipeline 15 may be exchanged with each other.

The configuration and layout of other components of the cooling system are similar to the configuration and layout of components of the first embodiment, which are not described in detail herein.

With the above layout manner of the cooling system, not only the independent operation of the first cooling circuit and the second cooling circuit can be realized, thus when one of the two cooling circuits fails, the other cooling circuit is started to realize fault-tolerant operation, to ensure the cooling efficiency of the heat-generating components, but also the pipelines and components of the layout can be further simplified, which has certain advantages when a compact layout space is required.

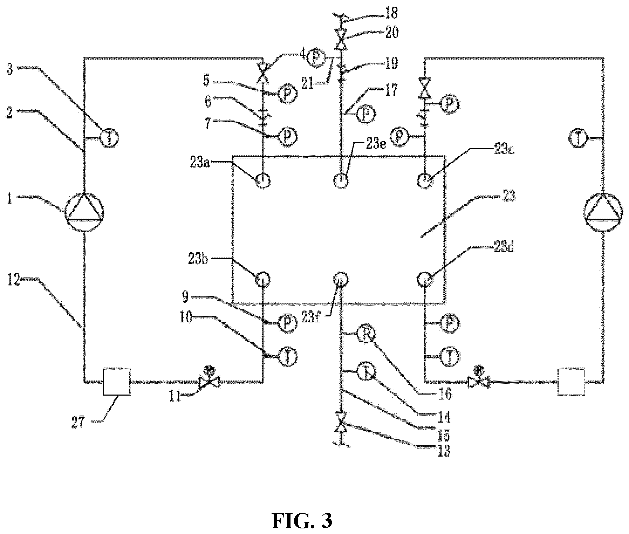

FIG. 3 is a schematic block diagram of the cooling system according to a third embodiment of the present application.

The cooling principle of the third embodiment is similar to that of the first embodiment, with the difference that the heat exchanger module of the cooling system of the third embodiment employs a three-passage heat exchanger 23, thus the arrangement and layout of components can be further effectively simplified. After one cooling circuit in the cooling system fails, the other cooling circuit in the cooling system can still operate normally.

In the third embodiment, the three-passage heat exchanger 23 may include a first flow passage, a second flow passage and a third flow passage which are independent of one another. A first liquid inlet 23a is in communication with a first liquid outlet 23b through the first flow passage, a second liquid inlet 23c is in communication with a second liquid outlet 23d through the second flow passage, and a third liquid inlet 23e is in communication with a third liquid outlet 23f through the third flow passage. The first cooling circuit is connected to the first flow passage of the three-passage heat exchanger 23, the second cooling circuit is connected to the third flow passage of the three-passage heat exchanger 23, and the third coolant supply pipeline 18 and the third coolant return pipeline 15 are connected to two ends of the second flow passage of the three-passage heat exchanger 23 respectively. In this way, the first coolant in the first cooling circuit can flow through the first flow passage of the three-passage heat exchanger 23 and the second coolant in the second cooling circuit can flow through the third flow passage of the three-passage heat exchanger 23, so as to exchange heat with the third coolant in the second flow passage of the three-passage heat exchanger 23.

The configuration and layout of other components of the cooling system are similar to the configuration and layout of components in the first embodiment, which are not described herein.

With the above layout manner of the cooling system, not only the independent operation of the first cooling circuit and the second cooling circuit can be realized, thus when one of the two cooling circuits fails, the other cooling circuit is started to realize fault-tolerant operation, to ensure the cooling efficiency of the heat-generating components, but also the two heat exchanges are integrated into one heat exchanger, which further simplifies the pipelines and components of the layout, and thus can realize the redundant layout of the two cooling circuits in a limited space.

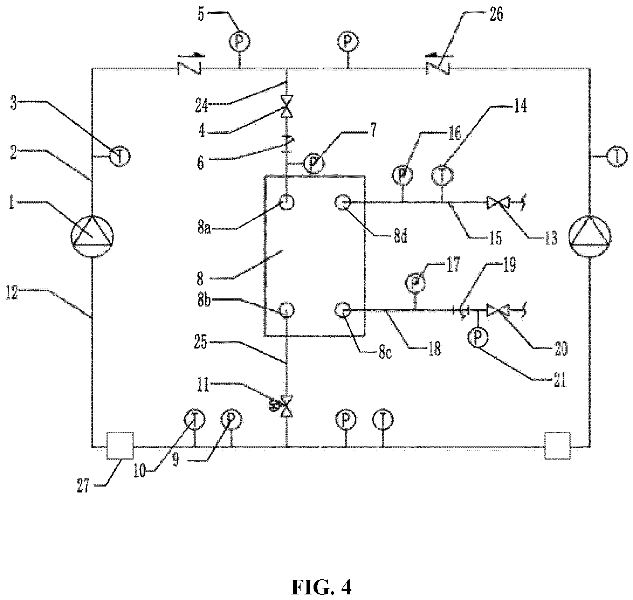

FIG. 4 is a schematic block diagram of the cooling system according to a fourth embodiment of the present application.

The cooling principle of the fourth embodiment is similar to that of the first embodiment, with the difference that the layout of the first cooling circuit, the second cooling circuit and the heat exchanger modules is different from the corresponding layout in the first embodiment.

As shown in FIG. 4, the first cooling circuit and the second cooling circuit are connected in parallel to be connected with the first passage of the heat exchange module. In this embodiment, the heat exchange module may be a single first heat exchanger 8 or multiple first heat exchangers 8 connected in series. The first cooling circuit and the second cooling circuit are connected with the first heat exchanger 8 in a manner that the first cooling circuit and the second cooling circuit are connected in parallel.

Specifically, the first heat exchanger 8 includes a first liquid inlet 8a, a liquid inlet header pipe 24 which is connected to the first liquid inlet 8a, a first liquid outlet 8b and a liquid outlet header pipe 25 which is connected to the first liquid outlet 8b, and the first cooling circuit and the second cooling circuit are connected in parallel between the liquid inlet header pipe 24 and the liquid outlet header pipe 25 of the first heat exchanger 8. That is, the confluence and distribution of the first cooling circuit and the second cooling circuit can be realized by the liquid inlet header pipe 24 and the liquid outlet header pipe 25. In this way, a part of pipelines of the two cooling circuits can be combined, which further simplifies the arrangement of the pipelines, thus realizing the compactness of the overall layout.

At least one of the first cooling circuit and the second cooling circuit may be provided with a check valve 26. For example, the check valve 26 may be arranged in the liquid inlet pipeline 2, which only allows one-way communication. In a case that one of the first cooling circuit and the second cooling circuit fails and stops operation, the other one of the first cooling circuit and the second cooling circuit can operate normally, and the coolant in the other cooling circuit flows into the first heat exchanger 8 through the liquid inlet header pipe 24. Since the check valve 26 is provided in the cooling circuit which is shut down due to failure, the coolant in the cooling circuit which operates normally cannot enter the failed cooling circuit, which ensures the cooling efficiency in the situation that a single small-capacity heat exchanger is provided. Therefore, fault-tolerant operation of the cooling system can be realized on the condition that the layout of the cooling system is greatly simplified.

In this embodiment, the liquid inlet pipeline 2 includes the liquid inlet header pipe 24 and pipelines connected between the circulating pump 1 and the first heat exchanger 8, and the liquid outlet pipeline 12 includes the liquid outlet header pipe 25 and pipelines connected between the circulating pump 1 and the first heat exchanger 8. In addition, in FIG. 4, the first filter 6 and the second pressure transmitter 7 are arranged in the liquid inlet header pipe 24, and the regulating valve 11 is arranged in the liquid outlet header pipe 25, but the arrangement is not limited to this. That is, the layout of the corresponding components in the first cooling circuit and the second cooling circuit can be arranged according to the actual situation, which is not limited to the example shown in the figures.

According to the cooling system of the present application, the reliability of the cooling system can be improved with the arrangement of the two cooling circuits. Therefore, when the cooling system is applied to the wind turbine, the shutdown problem of the wind turbine can be reduced, and thereby the availability of the wind turbine can be improved. In addition, according to the cooling system of the present application, the cooling efficiency of the cooling system can be further improved with the heat exchange module having the heat exchange fins being provided. In addition, according to the cooling system of the present application, the layout of the fault-tolerant structure of the two cooling circuits is simple and compact, and is easy to implement and maintain in a limited space. Moreover, according to the cooling system of the present application, a reasonable component layout can be realized according to the cooling logic and technological requirements of the component to be cooled.

## Claims

1. A cooling system for a heat source of a component to be cooled, comprising:
- a heat exchange module, wherein the heat exchange module comprises at least a first passage and a second passage which are independent of each other,
- a first cooling circuit, wherein the first cooling circuit is connected to the first passage of the heat exchange module, and
- a second cooling circuit, wherein the second cooling circuit is connected to the first passage of the heat exchange module, and wherein
- a first coolant in the first cooling circuit and/or a second coolant in the second cooling circuit is configured to flow through the first passage of the heat exchange module, to exchange heat with a third coolant which flows through the second passage of the heat exchange module, **characterized in that**
- the heat exchange module comprises a first heat exchanger (8) and a second heat exchanger (8') and each heat exchanger (8, 8') at least comprises a first passage and a second passage which are independent of each other, wherein
- the first coolant is configured to flow through the first passage of the first heat exchanger (8), to exchange heat with the third coolant which flows through the second passage of the first heat exchanger (8), and
- the second coolant is configured to flow through the first passage of the second heat exchanger (8'), to exchange heat with the third coolant which flows through the second passage of the heat exchange module (8'), wherein
- the cooling system employs a redundancy design with the dual cooling circuits as backup for each other, wherein
- the first coolant in the first cooling circuit and/or the second coolant in the second cooling circuit flows through the first passage of the cooling circuits so as to be used for performing heat exchange with the third coolant that flows through the second passage to directly absorb heat from the heat source without mass transfer.

2. The cooling system according to claim 1, wherein
- the second passage of the first heat exchanger (8) is in communication with the second passage of the second heat exchanger (8').

3. A cooling system for a heat source of a component to be cooled, comprising:
- a heat exchange module, wherein the heat exchange module comprises at least a first passage and a second passage which are independent of each other,
- a first cooling circuit, wherein the first cooling circuit is connected to the first passage of the heat exchange module, and
- a second cooling circuit, wherein the second cooling circuit is connected to a third passage of the heat exchange module, and wherein
- a first coolant in the first cooling circuit and/or a second coolant in the second cooling circuit is configured to flow through the first and/or the third passage/s of the heat exchange module, to exchange heat with a third coolant which flows through the second passage of the heat exchange module, **characterized in that**
- the heat exchange module further comprises is a three-passage heat exchanger (23), wherein the three-passage heat exchanger (23) has the first passage, the second passage and the third passage which are independent of one another, wherein
- the first coolant is configured to flow through the first passage and the second coolant is configured to flow through the third passage, to exchange heat with the third coolant which flows through the second passage, wherein
- the cooling system employs a redundancy design with the dual cooling circuits as backup for each other, wherein
- the first coolant in the first cooling circuit and/or the second coolant in the second cooling circuit flows through the passages of the cooling circuits so as to be used for performing heat exchange with the third coolant that flows through the second passage to directly absorb heat from the heat source without mass transfer.

4. A cooling system for a heat source of a component to be cooled, comprising:
- a heat exchange module, wherein the heat exchange module comprises at least a first passage and a second passage which are independent of each other,
- a first cooling circuit, wherein the first cooling circuit is connected to the first passage of the heat exchange module, and
- a second cooling circuit, wherein the second cooling circuit is connected to the first passage of the heat exchange module, and wherein
- a first coolant in the first cooling circuit and/or a second coolant in the second cooling circuit is configured to flow through the first passage of the heat exchange module, to exchange heat with a third coolant which flows through the second passage of the heat exchange module, **characterized in that**
- the heat exchange module is a single heat exchanger (8) with a first liquid inlet (8a), a liquid inlet header pipe (24) connected to the first liquid inlet (8a), a first liquid outlet (8b), and a liquid outlet header pipe (25) connected to the first liquid outlet (8b), and the first cooling circuit and the second cooling circuit are connected in parallel between the liquid inlet header pipe (24) and the liquid outlet header pipe (25), wherein
- the cooling system employs a redundancy design with the dual cooling circuits as backup for each other, wherein
- the first coolant in the first cooling circuit and/or the second coolant in the second cooling circuit flows through the first passage of the cooling circuits so as to be used for performing heat exchange with the third coolant that flows through the second passage to directly absorb heat from the heat source without mass transfer.

5. The cooling system according to claim 4, wherein at least one of the first cooling circuit and the second cooling circuit is provided with a check valve (26).

6. The cooling system according to claim 1 or 3 or 4, wherein the heat exchange module further comprises a liquid inlet pipeline (2) connected to a first liquid inlet (8a, 23a) of the heat exchange module and a liquid outlet pipeline (12) connected to a first liquid outlet (8b, 23b) of the heat exchange module, and a first filter (6) is provided in the liquid inlet pipeline (2), wherein a first pressure transmitter (5) is arranged at an inlet side of the first filter (6), and a second pressure transmitter (7) is arranged at an outlet side of the first filter (6).

7. The cooling system according to claim 6, wherein a third pressure transmitter (9) is provided in the liquid outlet pipeline (12) of the heat exchange module.

8. The cooling system according to claim 6, wherein a first on-off valve (4) and/or a first temperature sensor (3) is further provided in the liquid inlet pipeline (2) of the heat exchange module, and a regulating valve (11) and/or a second temperature sensor (10) is further provided in the liquid outlet pipeline (12) of the heat exchange module.

9. The cooling system according to claim 1 or 3 or 4, further comprising a third coolant supply pipeline (18) and a third coolant return pipeline (15), wherein a first end of the third coolant supply pipeline (18) is connected to a first end of the second passage of the heat exchange module, and a first end of the third coolant return pipeline (15) is connected to a second end of the second passage of the heat exchange module.

10. The cooling system according to claim 9, wherein a second filter (19) and/or a second on-off valve (20) and/or a fourth pressure transmitter (17) and a fifth pressure transmitter (21) located at two sides of the second filter (19) is provided in the third coolant supply pipeline (18), and/or, a sixth pressure transmitter (16) and/or a third temperature sensor (14) and/or a third on-off valve (13) is provided in the third coolant return pipeline (15).

11. The cooling system according to any one of claims 1 to 10, wherein the heat exchange module comprises a plate heat exchanger (8, 8', 23) which comprises heat exchange fins.

## Patentansprüche

1. Kühlsystem für eine Wärmequelle einer zu kühlenden Komponente, umfassend:
- ein Wärmeaustauschmodul, wobei das Wärmeaustauschmodul mindestens einen ersten Durchgang und einen zweiten Durchgang umfasst, die voneinander unabhängig sind,
- einen ersten Kühlkreislauf, wobei der erste Kühlkreislauf mit dem ersten Durchgang des Wärmeaustauschmoduls verbunden ist, und
- einen zweiten Kühlkreislauf, wobei der zweite Kühlkreislauf mit dem ersten Durchgang des Wärmeaustauschmoduls verbunden ist, und wobei
- ein erstes Kühlmittel im ersten Kühlkreislauf und/oder ein zweites Kühlmittel im zweiten Kühlkreislauf so konfiguriert sind, dass sie durch den ersten Durchgang des Wärmeaustauschmoduls fließen, um Wärme mit einem dritten Kühlmittel auszutauschen, das durch den zweiten Durchgang des Wärmeaustauschmoduls fließt, **dadurch gekennzeichnet, dass**
- das Wärmeaustauschmodul einen ersten Wärmetauscher (8) und einen zweiten Wärmetauscher (8') umfasst und jeder Wärmetauscher (8, 8') mindestens einen ersten Durchgang und einen zweiten Durchgang umfasst, die voneinander unabhängig sind, wobei
- das erste Kühlmittel so konfiguriert ist, dass es durch den ersten Durchgang des ersten Wärmetauschers (8) fließt, um Wärme mit dem dritten Kühlmittel auszutauschen, das durch den zweiten Durchgang des ersten Wärmetauschers (8) fließt, und
- das zweite Kühlmittel so konfiguriert ist, dass es durch den ersten Durchgang des zweiten Wärmetauschers (8') fließt, um Wärme mit dem dritten Kühlmittel auszutauschen, das durch den zweiten Durchgang des Wärmeaustauschmoduls (8') fließt, wobei
- das Kühlsystem ein Redundanzdesign mit den beiden Kühlkreisläufen als gegenseitige Sicherung verwendet, wobei
- das erste Kühlmittel im ersten Kühlkreislauf und/oder das zweite Kühlmittel im zweiten Kühlkreislauf durch den ersten Durchgang der Kühlkreisläufe fließen, um für den Wärmeaustausch mit dem dritten Kühlmittel verwendet zu werden, das durch den zweiten Durchgang fließt, um Wärme direkt von der Wärmequelle ohne Stoffübertragung zu absorbieren.

2. Kühlsystem nach Anspruch 1, wobei
- der zweite Durchgang des ersten Wärmetauschers (8) mit dem zweiten Durchgang des zweiten Wärmetauschers (8') in Kommunikation steht.

3. Kühlsystem für eine Wärmequelle einer zu kühlenden Komponente, umfassend:
- ein Wärmeaustauschmodul, wobei das Wärmeaustauschmodul mindestens einen ersten Durchgang und einen zweiten Durchgang umfasst, die voneinander unabhängig sind,
- einen ersten Kühlkreislauf, wobei der erste Kühlkreislauf mit dem ersten Durchgang des Wärmeaustauschmoduls verbunden ist, und
- einen zweiten Kühlkreislauf, wobei der zweite Kühlkreislauf mit einem dritten Durchgang des Wärmeaustauschmoduls verbunden ist, und wobei
- ein erstes Kühlmittel im ersten Kühlkreislauf und/oder ein zweites Kühlmittel im zweiten Kühlkreislauf so konfiguriert ist, dass sie durch den ersten und/oder den dritten Durchgang des Wärmeaustauschmoduls fließen, um Wärme mit einem dritten Kühlmittel auszutauschen, das durch den zweiten Durchgang des Wärmeaustauschmoduls fließt, **dadurch gekennzeichnet, dass**
- das Wärmeaustauschmodul ferner einen Dreidurchgang-Wärmetauscher (23) umfasst, wobei der Dreidurchgang-Wärmetauscher (23) den ersten Durchgang, den zweiten Durchgang und den dritten Durchgang aufweist, die voneinander unabhängig sind, wobei
- das erste Kühlmittel so konfiguriert ist, dass es durch den ersten Durchgang fließt, während das zweite Kühlmittel so konfiguriert ist, dass es durch den dritten Durchgang fließt, um Wärme mit dem dritten Kühlmittel auszutauschen, das durch den zweiten Durchgang fließt, wobei
- das Kühlsystem ein Redundanzdesign mit den beiden Kühlkreisläufen als gegenseitige Sicherung verwendet, wobei
- das erste Kühlmittel im ersten Kühlkreislauf und/oder das zweite Kühlmittel im zweiten Kühlkreislauf durch die Durchgänge der Kühlkreisläufe fließen, um für den Wärmeaustausch mit dem dritten Kühlmittel verwendet zu werden, das durch den zweiten Durchgang fließt, um Wärme direkt von der Wärmequelle ohne Stoffübertragung zu absorbieren.

4. Kühlsystem für eine Wärmequelle einer zu kühlenden Komponente, umfassend:
- ein Wärmeaustauschmodul, wobei das Wärmeaustauschmodul mindestens einen ersten Durchgang und einen zweiten Durchgang umfasst, die voneinander unabhängig sind,
- einen ersten Kühlkreislauf, wobei der erste Kühlkreislauf mit dem ersten Durchgang des Wärmeaustauschmoduls verbunden ist, und
- einen zweiten Kühlkreislauf, wobei der zweite Kühlkreislauf mit dem ersten Durchgang des Wärmeaustauschmoduls verbunden ist, und wobei
- ein erstes Kühlmittel im ersten Kühlkreislauf und/oder ein zweites Kühlmittel im zweiten Kühlkreislauf so konfiguriert sind, dass sie durch den ersten Durchgang des Wärmeaustauschmoduls fließen, um Wärme mit einem dritten Kühlmittel auszutauschen, das durch den zweiten Durchgang des Wärmeaustauschmoduls fließt, **dadurch gekennzeichnet, dass**
- das Wärmeaustauschmodul ein einzelner Wärmetauscher (8) mit einem ersten Flüssigkeitseinlass (8a), einem mit dem ersten Flüssigkeitseinlass (8a) verbundenen Flüssigkeitseinlass-Sammelrohr (24), einem ersten Flüssigkeitsauslass (8b) und einem mit dem ersten Flüssigkeitsauslass (8b) verbundenen Flüssigkeitsauslass-Sammelrohr (25) ist und der erste Kühlkreislauf und der zweite Kühlkreislauf parallel zwischen dem Flüssigkeitseinlass-Sammelrohr (24) und dem Flüssigkeitsauslass-Sammelrohr (25) geschaltet sind, wobei
- das Kühlsystem ein Redundanzdesign mit den beiden Kühlkreisläufen als gegenseitige Sicherung verwendet, wobei
- das erste Kühlmittel im ersten Kühlkreislauf und/oder das zweite Kühlmittel im zweiten Kühlkreislauf durch den ersten Durchgang der Kühlkreisläufe fließen, um für den Wärmeaustausch mit dem dritten Kühlmittel verwendet zu werden, das durch den zweiten Durchgang fließt, um Wärme direkt von der Wärmequelle ohne Stoffübertragung zu absorbieren.

5. Kühlsystem nach Anspruch 4, wobei mindestens einer von dem ersten Kühlkreislauf und dem zweiten Kühlkreislauf mit einem Rückschlagventil (26) versehen ist.

6. Kühlsystem nach Anspruch 1 oder 3 oder 4, wobei das Wärmeaustauschmodul ferner eine Flüssigkeitseinlassleitung (2), die mit einem ersten Flüssigkeitseinlass (8a, 23a) des Wärmeaustauschmoduls verbunden ist, und eine Flüssigkeitsauslassleitung (12) umfasst, die mit einem ersten Flüssigkeitsauslass (8b, 23b) des Wärmeaustauschmoduls verbunden ist, und wobei ein erster Filter (6) in der Flüssigkeitseinlassleitung (2) vorgesehen ist, wobei ein erster Drucktransmitter (5) an einer Einlassseite des ersten Filters (6) und ein zweiter Drucktransmitter (7) an einer Auslassseite des ersten Filters (6) angeordnet ist.

7. Kühlsystem nach Anspruch 6, wobei ein dritter Drucktransmitter (9) in der Flüssigkeitsauslassleitung (12) des Wärmeaustauschmoduls vorgesehen ist.

8. Kühlsystem nach Anspruch 6, wobei in der Flüssigkeitseinlassleitung (2) des Wärmeaustauschmoduls ferner ein erstes Ein-Aus-Ventil (4) und/oder ein erster Temperatursensor (3) und in der Flüssigkeitsauslassleitung (12) des Wärmeaustauschmoduls ferner ein Regelventil (11) und/oder ein zweiter Temperatursensor (10) vorgesehen sind.

9. Kühlsystem nach Anspruch 1 oder 3 oder 4, umfassend ferner eine dritte Kühlmittelzufuhrleitung (18) und eine dritte Kühlmittelrückführleitung (15), wobei ein erstes Ende der dritten Kühlmittelzufuhrleitung (18) mit einem ersten Ende des zweiten Durchgangs des Wärmeaustauschmoduls und ein erstes Ende der dritten Kühlmittelrückführleitung (15) mit einem zweiten Ende des zweiten Durchgangs des Wärmeaustauschmoduls verbunden ist.

10. Kühlsystem nach Anspruch 9, wobei ein zweiter Filter (19) und/oder ein zweites Ein-Aus-Ventil (20) und/oder ein vierter Drucktransmitter (17) und ein fünfter Drucktransmitter (21), die sich an zwei Seiten des zweiten Filters (19) befinden, in der dritten Kühlmittelzufuhrleitung (18) vorgesehen sind, und/oder wobei ein sechster Drucktransmitter (16) und/oder ein dritter Temperatursensor (14) und/oder ein drittes Ein-/Aus-Ventil (13) in der dritten Kühlmittelrückführleitung (15) vorgesehen sind.

11. Kühlsystem nach einem der Ansprüche 1 bis 10, wobei das Wärmeaustauschmodul einen Plattenwärmetauscher (8, 8', 23) umfasst, der Wärmeaustauschrippen umfasst.

## Revendications

1. Système de refroidissement pour une source de chaleur d'un composant à refroidir, comprenant :
- un module d'échange de chaleur, dans lequel le module d'échange de chaleur comprend au moins un premier passage et un deuxième passage qui sont indépendants l'un de l'autre,
- un premier circuit de refroidissement, dans lequel le premier circuit de refroidissement est connecté au premier passage du module d'échange de chaleur, et
- un deuxième circuit de refroidissement, dans lequel le deuxième circuit de refroidissement est connecté au premier passage du module d'échange de chaleur, et dans lequel
- un premier agent refroidissant dans le premier circuit de refroidissement et/ou un deuxième agent refroidissant dans le deuxième circuit de refroidissement sont/est configuré(s) pour circuler à travers le premier passage du module d'échange de chaleur, permettant ainsi un échange de chaleur avec un troisième agent refroidissant circulant à travers le deuxième passage du module d'échange de chaleur, **caractérisé en ce que**
- le module d'échange de chaleur comprend un premier échangeur de chaleur (8) et un deuxième échangeur de chaleur (8') et chaque échangeur de chaleur (8, 8') comprend au moins un premier passage et un deuxième passage qui sont indépendants l'un de l'autre, dans lequel
- le premier agent refroidissant est configuré pour circuler à travers le premier passage du premier échangeur de chaleur (8), permettant ainsi un échange de chaleur avec le troisième agent refroidissant qui circule à travers le deuxième passage du premier échangeur de chaleur (8), et
- le deuxième agent refroidissant est configuré pour circuler à travers le premier passage du deuxième échangeur de chaleur (8'), permettant ainsi un échange de chaleur avec le troisième agent refroidissant qui circule à travers le deuxième passage du module d'échange de chaleur (8'), dans lequel
- le système de refroidissement utilise une conception redondante avec les deux circuits de refroidissement comme secours l'un pour l'autre, dans lequel
- le premier agent refroidissant dans le premier circuit de refroidissement et/ou le deuxième agent refroidissant dans le deuxième circuit de refroidissement circulent/circule à travers le premier passage des circuits de refroidissement afin d'être utilisé(s) pour effectuer un échange de chaleur avec le troisième agent refroidissant qui circule à travers le deuxième passage pour absorber directement la chaleur de la source de chaleur sans transfert de masse.

2. Système de refroidissement selon la revendication 1, dans lequel,
- le deuxième passage du premier échangeur de chaleur (8) est en communication avec le deuxième passage du deuxième échangeur de chaleur (8').

3. Système de refroidissement pour une source de chaleur d'un composant à refroidir, comprenant :
- un module d'échange de chaleur, dans lequel le module d'échange de chaleur comprend au moins un premier passage et un deuxième passage qui sont indépendants l'un de l'autre,
- un premier circuit de refroidissement, dans lequel le premier circuit de refroidissement est connecté au premier passage du module d'échange de chaleur, et
- un deuxième circuit de refroidissement, dans lequel le deuxième circuit de refroidissement est connecté à un troisième passage du module d'échange de chaleur, et dans lequel
- un premier agent refroidissant dans le premier circuit de refroidissement et/ou un deuxième agent refroidissant dans le deuxième circuit de refroidissement sont/est configuré(s) pour circuler à travers le premier et/ou le troisième passage(s) du module d'échange de chaleur, permettant ainsi un échange de chaleur avec un troisième agent refroidissant circulant à travers le deuxième passage du module d'échange de chaleur, **caractérisé en ce que**
- le module d'échange de chaleur comprend en outre un échangeur de chaleur à trois passages (23), dans lequel l'échangeur de chaleur à trois passages (23) comporte le premier passage, le deuxième passage et le troisième passage qui sont indépendants les uns des autres, dans lequel
- le premier agent refroidissant est configuré pour circuler à travers le premier passage et le deuxième agent refroidissant est configuré pour circuler à travers le troisième passage, permettant ainsi un échange de chaleur avec le troisième agent refroidissant qui circule à travers le deuxième passage, dans lequel
- le système de refroidissement utilise une conception redondante avec les deux circuits de refroidissement comme secours l'un pour l'autre, dans lequel
- le premier agent refroidissant dans le premier circuit de refroidissement et/ou le deuxième agent refroidissant dans le deuxième circuit de refroidissement circulent/circule à travers les passages des circuits de refroidissement afin d'être utilisé(s) pour effectuer un échange de chaleur avec le troisième agent refroidissant qui circule à travers le deuxième passage pour absorber directement la chaleur de la source de chaleur sans transfert de masse.

4. Système de refroidissement pour une source de chaleur d'un composant à refroidir, comprenant :
- un module d'échange de chaleur, dans lequel le module d'échange de chaleur comprend au moins un premier passage et un deuxième passage qui sont indépendants l'un de l'autre,
- un premier circuit de refroidissement, dans lequel le premier circuit de refroidissement est connecté au premier passage du module d'échange de chaleur, et
- un deuxième circuit de refroidissement, dans lequel le deuxième circuit de refroidissement est connecté au premier passage du module d'échange de chaleur, et dans lequel
- un premier agent refroidissant dans le premier circuit de refroidissement et/ou un deuxième agent refroidissant dans le deuxième circuit de refroidissement sont/est configuré(s) pour circuler à travers le premier passage du module d'échange de chaleur, permettant ainsi un échange de chaleur avec un troisième agent refroidissant circulant à travers le deuxième passage du module d'échange de chaleur, **caractérisé en ce que**
- le module d'échange de chaleur est un échangeur de chaleur unique (8) ayant une première entrée de liquide (8a), un tuyau collecteur d'entrée de liquide (24) connecté à la première entrée de liquide (8a), une première sortie de liquide (8b) et un tuyau collecteur de sortie de liquide (25) connecté à la première sortie de liquide (8b), et le premier circuit de refroidissement et le deuxième circuit de refroidissement sont connectés en parallèle entre le tuyau collecteur d'entrée de liquide (24) et le tuyau collecteur de sortie de liquide (25), dans lequel
- le système de refroidissement utilise une conception redondante avec les deux circuits de refroidissement comme secours l'un pour l'autre, dans lequel
- le premier agent refroidissant dans le premier circuit de refroidissement et/ou le deuxième agent refroidissant dans le deuxième circuit de refroidissement circulent/circule à travers le premier passage des circuits de refroidissement afin d'être utilisé(s) pour effectuer un échange de chaleur avec le troisième agent refroidissant qui circule à travers le deuxième passage pour absorber directement la chaleur de la source de chaleur sans transfert de masse.

5. Système de refroidissement selon la revendication 4, dans lequel au moins l'un du premier circuit de refroidissement et du deuxième circuit de refroidissement est pourvu d'une vanne d'anti retour (26).

6. Système de refroidissement selon la revendication 1 ou 3 ou 4, dans lequel le module d'échange de chaleur comprend en outre une tuyauterie d'entrée de liquide (2) connectée à une première entrée de liquide (8a, 23a) du module d'échange de chaleur et une tuyauterie de sortie de liquide (12) connectée à une première sortie de liquide (8b, 23b) du module d'échange de chaleur, et un premier filtre (6) est prévu dans la tuyauterie d'entrée de liquide (2), dans lequel un premier transmetteur de pression (5) est disposé à un côté d'entrée du premier filtre (6), et un deuxième transmetteur de pression (7) est disposé à un côté de sortie du premier filtre (6).

7. Système de refroidissement selon la revendication 6, dans lequel un troisième transmetteur de pression (9) est prévu dans la tuyauterie de sortie de liquide (12) du module d'échange de chaleur.

8. Système de refroidissement selon la revendication 6, dans lequel une première vanne tout-ou-rien (4) et/ou un premier capteur de température (3) est en outre prévu dans la tuyauterie d'entrée de liquide (2) du module d'échange de chaleur, et une vanne de régulation (11) et/ou un deuxième capteur de température (10) est en outre prévu dans la tuyauterie de sortie de liquide (12) du module d'échange de chaleur.

9. Système de refroidissement selon la revendication 1 ou 3 ou 4, comprenant en outre une troisième tuyauterie d'alimentation en agent refroidissant (18) et une troisième tuyauterie de retour d'agent refroidissant (15), dans lequel une première extrémité de la troisième tuyauterie d'alimentation en agent refroidissant (18) est connectée à une première extrémité du deuxième passage du module d'échange de chaleur, et une première extrémité de la troisième tuyauterie de retour d'agent refroidissant (15) est connectée à une deuxième extrémité du deuxième passage du module d'échange de chaleur.

10. Système de refroidissement selon la revendication 9, dans lequel un deuxième filtre (19) et/ou une deuxième vanne tout-ou-rien (20) et/ou un quatrième transmetteur de pression (17) et un cinquième transmetteur de pression (21) situés à deux côtés du deuxième filtre (19) sont/et prévu(s) dans la troisième tuyauterie d'alimentation en agent refroidissant (18), et/ou, un sixième transmetteur de pression (16) et/ou un troisième capteur de température (14) et/ou une troisième vanne tout-ou-rien (13) sont/est prévu(s) dans la troisième tuyauterie de retour d'agent refroidissant (15).

11. Système de refroidissement selon l'une quelconque des revendications 1 à 10, dans lequel le module d'échange de chaleur comprend un échangeur de chaleur à plaque (8, 8', 23) qui comprend des ailettes d'échange de chaleur.
